# EUROPEAN PATENT APPLICATION

(11) **EP 1 844 853 A1**
(43) Date of publication of application: **17.10.2007**
(21) Application number: 05704319.2
(22) Date of filing: 31.01.2005
(51) Int. Cl.: B01J 20/22, C10L 1/04

(54) **CARBON DIOXIDE ADSORBER FOR USE AT COMBUSTION OF FOSSIL FUEL, CONTAINING DRY POWDER OF PLANT FIBER**

(71) Applicant: Sugimoto, Ichiro, Machida-shi, Tokyo 194-0002 (JP); Sugimoto, Takako, Machida-shi, Tokyo 194-0002 (JP); Sugimoto, Chieko, Machida-shi, Tokyo 194-0002 (JP); Sugimoto, Mieko, Machida-shi, Tokyo 194-0002 (JP)
(72) Inventor: SUGIMOTO, Ichiro, Machida-shi, Tokyo 194-0002 (JP); SUGIMOTO, Takao, Machida-shi, Tokyo 194-0002 (JP); SUGIMOTO, Chieko, Machida-shi, Tokyo 194-0002 (JP); SUGIMOTO, Keiichi, deceased (JP)
(74) Representative: Bannerman, David Gardner
(86) International application number: PCT/JP2005/001369
(87) International publication number: WO 2006/080089

(57) **Abstract**

The present invention provides a carbon dioxide adsorber for use at combustion of a fossil fuel, comprising a compressed dry powder of plant fiber; a fossil fuel **characterized in that** such compressed dry powder of plant fiber is contained; and use of the carbon dioxide adsorber for use at combustion of a fossil fuel, comprising a compressed dry powder of plant fiber.

## Description

### TECHNICAL FIELD

The present invention relates to a carbon dioxide adsorber for use at combustion of a fossil fuel, containing a dry powder of plant fiber, and to a fossil fuel characterized by containing such a dry powder of plant fiber.

### BACKGROUND ART

In the modem society in which a large amount of energy is consumed, vast amounts of fossil fuels are used as energy sources every day. When energy is produced from a fossil fuel, there is a need of the combustion of the fossil fuel. However, the combustion of the fossil fuel emits a large amount of carbon dioxide into the atmosphere.
From the 20th century onward, the concentration of carbon dioxide in the atmosphere of the earth is increasing steadily, and the increase is recognized as one of the great factors that accelerate global warming. It is expected that global warming leads to a critical situation in the ecosystem of the entire earth. For avoiding such a situation, a very important subject for all human beings is to reduce the amount of emission of carbon dioxide.

On the other hand, a biodegradable plastic having improved biodegradability, which is prepared by mixing a biodegradable plastic with a dry powder of fibers in palm mesocarp, has been known in the art (see Patent Document 1).
However, there has been no report on the use of a dry powder of plant fiber in the combustion of a fossil fuel to reduce the amount of carbon dioxide emitted from the fossil fuel.
Patent Document 1: JP-A-9-263700.

### DISCLOSURE OF THE INVETION

### PROBLEMS TO BE SOLVED BY THE INVENTION

The present invention has been made from the above viewpoints and an object of the present invention is to provide a carbon dioxide adsorber for use at combustion of a fossil fuel, containing a dry powder of plant fiber and to provide a fossil fuel characterized by containing such dry powder of plant fiber.

### MEANS FOR SOLVING THE PROBLEMS

The inventors of the present invention have made extensive studies with a view to solving the above-mentioned problems. As a result, they have found that the above-mentioned object can be achieved by the use of a dry powder of plant fiber. The present invention has been completed based on this finding.
That is, the gist of the present invention is as follows.
(1) A carbon dioxide adsorber for use at combustion of a fossil fuel, comprising a dry powder of plant fiber.
(2) The carbon dioxide adsorber for use at combustion of a fossil fuel according to (1), wherein the plant fiber is at least one plant fiber selected from a palm shell, a wood, a cane, and a palm fiber.
(3) The carbon dioxide adsorber for use at combustion of a fossil fuel according to (1) or (2), wherein the dry powder of the dietary fiber is a compressed dry powder of dietary fiber.
(4) The carbon dioxide adsorber for use at combustion of a fossil fuel according to (3), wherein the compressed dry powder of the plant fiber is a powder obtained by removing contaminants from plant fiber, drying the plant fiber to a moisture content of less than 10%, compressing the dried fiber at a compression ratio of 4 : 1 to 6 : 1, pulverizing it to make a powder having a particle size in a range of 1 to 80 microns, and then drying the powder to a moisture content of less than 5 wt%.
(5) The carbon dioxide adsorber for use at combustion of a fossil fuel according to any one of (1) to (4), wherein the fossil fuel is heavy oil.
(6) A fossil fuel comprising 0.1 to 5 wt% of a dry powder of plant fiber.
(7) The fossil fuel according to (6), wherein the plant fiber is at least one plant fiber selected from a palm shell, a wood, a cane, and a palm fiber.
(8) The fossil fuel according to (6) or (7), wherein the dry powder of the dietary fiber is a compressed dry powder of dietary fiber.
(9) The fossil fuel according to (8), wherein the compressed dry powder of the plant fiber is a powder obtained by removing contaminants from plant fiber, drying the plant fiber to a moisture content of less than 10%, compressing the dried fiber at a compression ratio of 4 : 1 to 6 : 1, pulverizing it to make a powder having a particle size in a range of 1 to 80 microns, and then drying the powder to a moisture content of less than 5 wt%.
(10) The fossil fuel according to any one of (6) to (9), wherein the fossil fuel comprises heavy oil.
(11) A method of reducing an amount of carbon dioxide emitted from a fossil fuel at combustion of the fossil fuel, the method comprises incorporating a dry powder of plant fiber into the fossil fuel.
(12) The method of reducing an amount of carbon dioxide emitted from a fossil fuel at combustion of the fossil fuel according to (11), wherein the dry powder of the dietary fiber is a compressed dry powder of dietary fiber.

### EFFECTS OF THE INVENTION

The dry powder of plant fiber of the present invention has an advantage of reducing the amount of carbon dioxide emitted from a fossil fuel at combustion of the fossil fuel.

### BEST MODE FOR CARRING OUT THE INVENTION

Hereinafter, the present invention will be explained in detail.

### <1> Carbon dioxide adsorber for use at combustion of fossil fuel, containing dry powder of plant fiber of the present invention

The carbon dioxide adsorber for use at combustion of a fossil fuel, which contains a dry powder of plant fiber, of the present invention adsorbs carbon dioxide emitted from a fossil fuel at combustion of the fossil fuel thereby reduces the amount of carbon dioxide emitted.

The carbon dioxide adsorber for use at combustion of a fossil fuel of the present invention contains a dry powder of plant fiber. The dry powder of plant fiber is not specifically limited as far as it is a dried powder of plant fiber.
The term "plant fiber" used herein is not specifically limited as far as it is a substance containing plant fibers. The plant fiber is preferably a palm shell, a wood, a cane, or a palm fiber, more preferably a palm shell or a palm fiber. This is because those fibers are excellent in reduction effects on the amount of carbon dioxide emitted from a fossil fuel at combustion of the fossil fuel. Here, the species of woods and canes are not specifically limited as far as they provide the reduction effects on the amount of carbon dioxide emitted from a fossil fuel at combustion of the fossil fuel. For the woods, for example, cedar may be suitably used. In addition, as far as the reduction effects can be exerted on the amount of carbon dioxide emitted from a fossil fuel at combustion of the fossil fuel, the palm species of palm shells and palm fibers may be coconut palm or any of other palms, such as date palm and nipa palm. Of those, coconut palm is preferable.

The dry powder of plant fiber of the present invention is not limited to a compressed dry powder of dietary fiber, but preferably the compressed dry powder of dietary fiber. The compression leads to an increase in density of plant fiber in the dried powder of plant fiber, thereby solid micropores are generated in the powder at combustion, so that an adsorbing action on carbon dioxide may be improved. The process of obtaining a compressed dry powder of dietary fiber is not specifically limited, so that the compression can be carried out using a pressing machine or the like at any stage of the production of the powder.

Plant fibers used in the production of the dry powder thereof may contain contaminants other than the plant fibers, but preferably contain as small an amount of a contaminant as possible. This is because the use of such plant fibers leads to excellent reduction effects on the amount of carbon dioxide emitted from a fossil fuel at combustion of the fossil fuel. The term "contaminants" as used herein refers to any component other than plant fibers in a substance containing the plant fibers, and for example, includes salt and tannin. A method for removal of contaminants is not specifically limited as far as the contaminants can be removed with the method. For example, when fibers of coconut mesocarp are used, the coconut mesocarp is dipped in fresh water for about 10 to 16 months so that a pulpy substance is dissolved, followed by collecting fibers therefrom. The fibers are then exposed to the sun for about two or more years, so that the contained contaminants, such as salts and tannin, can be removed. Further, the removal of contaminants and the drying of fibers may be carried out at any stage in the production of a compressed dry powder of dietary fiber. For example, such steps may be carried out before or after the compression or pulverizing of plant fibers.

The process for manufacturing the dry powder of plant fiber of the present invention is not specifically limited as far as the dry powder of plant fiber attains the reduction effects on the amount of carbon dioxide emitted from a fossil fuel at combustion of the fossil fuel. For example, the dry powder can be produced by pulverizing a substance containing plant fiber with a hammer mill, a ball mill, a jet mill, a stone mill, or the like. When the substance containing plant fiber has a high moisture content, it may be dried before or after the pulverization. Means for drying the substance may include, but not specifically limited to, air drying and hot-air drying utilizing electric power or the like. The water content of the dry powder of plant fiber of the present invention may be 10 wt% or more, but is preferably less than 10 wt%, more preferably less than 5 wt%.

Further, the dry powder of plant fiber of the present invention may have a particle size of 80 microns or more, but has a particle size of preferably less than 80 microns, more preferably less than 15 microns, still more preferably less than 10 microns, still further more preferably less than 5 microns, most preferably less than 3 microns. This is because an improvement of reduction effects on carbon dioxide per certain weight of the dry powder of plant fiber can be attained when the dry powder of plant fiber to be used has a small particle size.

A method of making a dry powder of plant fiber into one having a certain particle size or less is not specifically limited. For example, a dry powder of plant fiber having a particle size of 15 microns or less can be obtained by pulverizing dried dietary fibers and then filtrating the powder through a 400-mesh net.
For obtaining a dry powder of plant fiber having a smaller particle size than that described above, a container having a bottom part, a side part, a lid part, and holes in the bottom and side parts is provided, and the dry powder of plant fiber obtained by the above method is then placed on the hole-free area of the bottom part of the container. Subsequently, air is blown into the container through the hole of the bottom part thereof and the gas in the container is then aspirated through the hole of the side part, whereby a dry powder having a particle size of less than 15 microns can be selected.

Here, the shape, size, or the like of the holes of each of the container is not specifically limited as far as the hole of the side part of the container is located at a position higher than that of the bottom part, and a dry powder having a predetermined particle size or less, which is smaller than that of a dry powder of plant fiber before the selection, can be selected by sucking up the gas of the inside of the container though the hole of the side part of the container while blowing air through the hole of the bottom part of the container.

The strength of air blown into the bottom part of the container and the height from the bottom part to the hole of the side part can be adjusted to allow the selection of a dry powder with a particle size of, for example, less than 15 microns, less than 10 microns, less than 5 microns, less than 3 microns, or less than 1 micron.
The strength of air blown into the bottom part of the container is not completely defined because it depends on the objective particle size of the dry powder of plant fiber, the height from the bottom part of the container to the hole of the side part thereof, the shape of the container or the hole, or the like. However, the strength may be adjusted so that, when air is blown into the container through the bottom part thereof, the height by which the dry powder before the selection rises up in the air in the container may be appropriately separated in the container depending on the particle sizes thereof (the dry powder having a larger particle size does not rise up enough, while the dry powder having a smaller particle size rises up relatively higher in the container). Such a kind of the adjustment may be performed comparatively easily after repeating the process of trial and error several times.

Further, a container having a bottom part, a side part, a lid part, and holes formed in the bottom and side parts may be in the form of a cylinder such as a column, a globe, a cube, or the like, but not specifically limited to, as far as it can be used for the selection of a dry powder of plant fiber as described above. The material of the container is not specifically limited as far as it can be used for the selection of a dry powder of plant fiber as described above.

In the case of using the fiber of coconut palm, the manufacturing method as described above can be also employed in a manner similar to one using other plant fibers. In this case, however, the method particularly preferably includes: removing contaminants from plant fibers; drying the fibers up to a moisture content of less than 10%; compressing the dried product to a compression ratio of 4 : 1 to 6 : 1 (preferably 6 : 1); pulverizing the resultant into a powder of a particle size of 1 to 80 microns; and drying the powder to a moisture content of less than 5 wt%.
The dry powder of plant fiber of the present invention is used for reducing the amount of carbon dioxide emitted at combustion of a fossil fuel. The term "fossil fuel" as used herein is not specifically limited as far as the fossil fuel is allowed to reduce the amount of carbon dioxide emitted from itself by being combusted together with the dry powder of plant fiber of the present invention, and examples of the fossil fuel include crude oil, heavy oil, light oil, kerosene, gasoline, petroleum gas, natural gas, and coal. Of those, crude oil, heavy oil, light oil, kerosene, and gasoline are preferable, and heavy oil is particularly preferable.

It is believed that the effect of the present invention, in which the amount of carbon dioxide emitted from a fossil fuel at combustion of the fossil fuel can be reduced, may be obtained by the following reasons.
The dry powder of plant fiber of the present invention contains a trace amount of moisture. When the dry powder of plant fiber of the present invention is combusted together with a fossil fuel, the moisture evaporates momentarily, and numberless vacuum micropores are generated in the dry powder of plant fiber. Part of carbon dioxide molecules generated by combustion of the dry powder of plant fiber is adsorbed in the above micropores, and, as a result, the amount of carbon dioxide emitted into the atmosphere at combustion of the dry powder of plant can be reduced by, for example, 50% or more.
Therefore, even in the case of using a fossil fuel other than heavy oil used in the example of the present application described later, just as in the case of using heavy oil, it is expected that the amount of carbon dioxide emitted from the fossil fuel at combustion of the fossil fuel can be reduced.

The phrase " the amount of carbon dioxide emitted from a fossil fuel at combustion of the fossil fuel can be reduced" as used herein means that the amount of carbon dioxide emitted from the fossil fuel with the addition of the carbon dioxide adsorber for use at combustion of a fossil fuel containing a dry powder of plant fiber of the present invention is smaller than that from the fossil fuel without the addition of the carbon dioxide adsorber, wherein in both cases, the fossil fuel is combusted under the same condition except that the addition / unaddition of the carbon dioxide adsorber for use at combustion of a fossil fuel containing a dry powder of plant fiber of the present invention.

Further, when the normal activated carbon already having a fine micropore structure is added to a fine powder, the micropore structure may be destroyed and the adsorption ability may decrease remarkably. In contrast, the dry powder of plant fiber of the present invention is characterized in that a micropore structure is prepared after the pulverization of dietary fibers. As a result, comparing with the normal activated carbon or the like, one having an extremely wide adsorption area per gram can be obtained.
Further, the carbon dioxide adsorber for use at combustion of a fossil fuel containing a dry powder of plant fiber of the present invention is not specifically limited as far as it contains the dry powder of plant fiber as described above. For example, it may be composed only of the dry powder of plant fiber as described above. In addition, as far as a reducing effect on the amount of carbon dioxide emitted at combustion of a fossil fuel is not impaired, any other component except the dry powder of plant fiber may be included. A method of manufacturing the carbon dioxide adsorber for use at combustion of a fossil fuel of the present invention is not specifically limited as far as a reducing effect on the amount of carbon dioxide emitted at combustion of the fossil fuel is not impaired.

The using method of the carbon dioxide adsorber for use at combustion of a fossil fuel containing a dry powder of plant fiber of the present invention is not specifically limited as far as it is a method of reducing the amount of carbon dioxide emitted at combustion of the fossil fuel. For example, the carbon dioxide adsorber for use at combustion of a fossil fuel containing a dry powder of plant fiber of the present invention may be mixed with a fossil fuel in advance and the mixture may be then combusted. Alternatively, the carbon dioxide adsorber for use at combustion of a fossil fuel containing a dry powder of plant fiber of the present invention may be added to a fossil fuel nearly simultaneously at combustion of the fossil fuel. Alternatively, the carbon dioxide adsorber for use at combustion of a fossil fuel containing a dry powder of plant fiber of the present invention may be added to a fossil fuel which is already burning. Alternatively, the carbon dioxide adsorber for use at combustion of a fossil fuel containing a dry powder of plant fiber of the present invention may be mixed with a gas containing oxygen to be added at combustion of a fossil fuel. The mixture may not be added as a mixture gas to the fossil fuel, or may be added as such a mixture gas.

The used amount of the carbon dioxide adsorber for use at combustion of a fossil fuel containing a dry powder of plant fiber of the present invention is not specifically limited, but the dry powder of plant fiber in the carbon dioxide adsorber can be used so that the amount thereof is generally in the range of 0.1 to 5 wt%, preferably in the range of 0.3 to 1.0 wt% with respect to a fossil fuel. The reason for the foregoing is as described below. If the amount of the dry powder of plant fiber added is too small, the reduction effects on the amount of carbon dioxide emitted at combustion of a fossil fuel may be insufficient. In contrast, if it is excessive, the effects may hit a peak.

The carbon dioxide adsorber for use at combustion of a fossil fuel containing a dry powder of plant fiber of the present invention can be used in various facilities in each of which a fossil fuel is used in combustion as far as there is no disadvantage. Examples of the facilities include: facilities in each of which heavy oil or coal is used as a fuel, such as heat powder plants, and boats and ships; space heaters each using kerosene as a fuel; diesel engines each using light oil as a fuel; and engines each using gasoline as a fuel.

### <2> Fossil fuel characterized by containing dry powder of plant fiber of the present invention

Another aspect of the present invention is a fossil fuel which is characterized by containing the dry powder of plant fiber of the present invention. The meanings of the "dry powder of plant fiber" and "fossil fuel" of the present invention are identical with those described in the above section <1>.

The fossil fuel of the present invention contains generally 0.1 to 5 wt%, preferably 0.3 to 1.0 wt% of the dry powder of plant fiber of the present invention with respect to the fossil fuel. If the amount of a dry powder of plant fiber added is too small, the reduction effects on the amount of carbon dioxide emitted at combustion of the fossil fuel may be insufficient. In contrast, if it is excessive, the effects may hit a peak.

In addition, the fossil fuel of the present invention may contain any additional component other than the dry powder of plant fiber of the present invention as far as the functions as a fossil fuel are not impaired and the reduction effects on the amount of carbon dioxide emitted at combustion of the fossil fuel are not impaired.

### <3> Method of manufacturing dry powder of plant fiber of the present invention

Another aspect of the present invention is a method of manufacturing a dry powder of plant fiber, which includes the following steps of:
(A) pulverizing a substance containing plant fibers into a powder having a particle size of 1 to 80 microns;
(B) drying the powder to a moisture content of less than 10 wt%, preferably less than 5 wt%, thereby obtaining a dry a powder;
(C) preparing a container having a bottom part, a side part, a lid part, and holes in the bottom and side parts; and
(D) selecting a dry powder having a particle size of less than 15 microns by placing the dry powder on the hole-free area of the bottom part, and aspirating a gas in the container through the hole of the side part while blowing air into the container through the hole of the bottom part thereof.
   In the above manufacturing method, the drying in the step (B) may be carried out before the pulverization in the step (A), or may be simultaneously carried out with the pulverization in the step (A). In addition, when the moisture content of a substance containing plant fibers is already less than 10 wt% or less than 5 wt%, the drying step (B) may be omitted.

Further, the method of manufacturing a dry powder of plant fiber may or may not further include either or both of the step of removing contaminants from the plant fiber, and the step of compressing the substance containing the dietary fibers or the dried powder thereof to a compression ratio of 4 : 1 to 6 : 1 (preferably 6 : 1). The method preferably includes either or both of them.
The specific content of the present method is as set forth in the above section <1>.

### <4> Method of reducing amount of carbon dioxide emitted from fossil fuel at combustion of fossil fuel

Another aspect of the present invention is a method of reducing the amount of carbon dioxide emitted from a fossil fuel at combustion of the fossil fuel by incorporating a dry powder of plant fiber into the fossil fuel. The specific content of the present method is as set forth in the above section <1>.

### EXAMPLES

Hereinafter, the present invention will be described more specifically with reference to examples.

### (Manufacturing Example 1) Production of dry powder of plant fibers and preparation of heavy oil containing the same

For removing coconut endocarp and embryo, a coconut was dipped in fresh water for about 10 to 16 months so that a pulpy substance would be dissolved, followed by collecting fibers therefrom. Subsequently, a slag run out of the fibers when the fibers were used in the production of a string, net, rope, or the like was exposed to the sun for about two or more years, thereby removing contained salts and tannin. The fibers were forcibly dried by heated air at 80°C for about 15 hours or longer, thereby reducing the percentage of moisture content to 10%. Subsequently, fine fragments of 5 to 10 mm in length emitted when the fibers were used in the production of a net were collected and then subjected to a compression treatment with a press machine at a compression ratio of 6 : 1. The compressed product thus obtained was crushed using a grinding machine, followed by a pulverization process using a hammer mill, a jet mil, and a ball mill in that order. After that, the powder was classified through a 400-mesh filter. Consequently, the compressed dry powder of coconut mesocarp fiber slag passed through the 400-mesh filter was obtained. The particle size of the compressed dry powder of coconut mesocarp fiber slag thus obtained was about 15 microns or less.
A container having a bottom part, a side part, a lid part, and holes in the bottom and side parts (the height of the hole of the side part from the bottom part was about 3 m) was prepared. Then, the compressed dry powder of coconut mesocarp fiber slag thus obtained was placed on the hole-free area of the bottom part of the container. Subsequently, air was blown into the container through the hole of the bottom part thereof (wind velocity of about 3 m/min) and the gas in the container was then aspirated through the hole of the side part. Consequently, the compressed dry powder of coconut mesocarp fiber slag thus obtained had a particle size of about 3 microns or less.

The compressed dry powder of coconut mesocarp fiber slag having a particle size of about 3 microns or less, which was obtained in the above manufacturing example, was added in an amount of 0.3 wt% to heavy oil, and then the whole was mixed, thereby preparing heavy oil containing the compressed dry powder of coconut mesocarp fiber slag.

### (Example 1)

Determination of amount of carbon dioxide emitted at combustion of heavy oil containing compressed dry powder of coconut mesocarp fiber slag
The determination of the amount of carbon dioxide emitted at combustion of heavy oil containing the compressed dry powder of coconut mesocarp fiber slag of the above manufacturing example was requested to the High Polymer Test & Evaluation Center of the Japan Chemical Innovation Institute. The examination was carried out on the basis of JIS K 7217 (Analytical technique of plastic combustion gas). As a result, when 1 g of the heavy oil containing the compressed dry powder of coconut mesocarp fiber slag of the above manufacturing example was combusted, 1.1 g of carbon dioxide was emitted. Considering that about 2.7 g of carbon dioxide might be emitted when 1 g of heavy oil was combusted, the heavy oil containing the compressed dry powder of coconut mesocarp slag of the present invention was believed to reduce the amount of emission of carbon dioxide at combustion extensively.

### (Manufacturing Example 2) Production of dried wood powder and preparation of heavy oil containing the same

Small pieces of wood generated when the wood of the cedar was cut with a saw were collected and then processed into a powder with a stone mill. Subsequently, the powder was classified through a 400-mesh filter and the dried wood powder passed through the 400-mesh filter was then obtained. The dried wood powder thus obtained had a particle size of about 15 microns or less.
Next, a container having a bottom part, a side part, a lid part, and holes in the bottom and side parts (the height of the hole of the side part from the bottom part was about 3 m) was prepared. Then, the dried wood powder thus obtained was placed on the hole-free area of the bottom part of the container. Subsequently, air was blown into the container through the hole of the bottom part thereof (wind velocity of about 3 m/min) and the gas in the container was then aspirated through the hole of the side part. Consequently, the dried wood powder thus obtained had a particle size of about 3 microns or less.

The dried wood powder having a particle size of about 3 microns or less, which was obtained in the above manufacturing example, was added in an amount of 1.0 wt% to heavy oil, and then the whole was mixed, thereby preparing heavy oil containing the dried wood powder.

### (Example 2)

Determination of amount of carbon dioxide emitted at combustion of heavy oil containing dried wood powder

### Wood powder

The determination of the amount of carbon dioxide emitted at combustion of heavy oil containing the dried wood powder of Manufacturing Example 2 as described above was requested to the High Polymer Test & Evaluation Center of the Japan Chemical Innovation Institute. The examination was carried out on the basis of JIS K 7217 (Analytical technique of plastic combustion gas). As a result, when 1 g of the heavy oil containing the dried wood powder of the above manufacturing example was combusted, 1.2 g of carbon dioxide was emitted. Considering that about 2.7 g of carbon dioxide might be emitted when 1 g of heavy oil was combusted, the heavy oil containing the dried wood powder of the present invention was believed to reduce the amount of emission of carbon dioxide at combustion extensively.

### INDUSTRIAL APPLICABILITY

The dry powder of plant fiber of the present invention can be used in various facilities where a fossil fuel is combusted. The use of the dry powder of plant fiber of the present invention is very effective against global warming because the use reduces the amount of carbon dioxide emitted from a fossil fuel at combustion thereof.

## Claims

1. A carbon dioxide adsorber for use at combustion of a fossil fuel, comprising a dry powder of plant fiber.

2. The carbon dioxide adsorber for use at combustion of a fossil fuel according to claim 1, wherein the plant fiber is at least one plant fiber selected from a palm shell, a wood, a cane, and a palm fiber.

3. The carbon dioxide adsorber for use at combustion of a fossil fuel according to claim 1 or 2, wherein the dry powder of the dietary fiber is a compressed dry powder of dietary fiber.

4. The carbon dioxide adsorber for use at combustion of a fossil fuel according to claim 3, wherein the compressed dry powder of the plant fiber is a powder obtained by removing contaminants from plant fiber, drying the plant fiber to a moisture content of less than 10%, compressing the dried fiber at a compression ratio of 4 : 1 to 6 : 1, pulverizing it to make a powder having a particle size in a range of 1 to 80 microns, and then drying the powder to a moisture content of less than 5 wt%.

5. The carbon dioxide adsorber for use at combustion of a fossil fuel according to any one of claims 1 to 4, wherein the fossil fuel is heavy oil.

6. A fossil fuel comprising 0.1 to 5 wt% of a dry powder of plant fiber.

7. The fossil fuel according to claim 6, wherein the plant fiber is at least one plant fiber selected from a palm shell, a wood, a cane, and a palm fiber.

8. The fossil fuel according to claim 6 or 7, wherein the dry powder of the dietary fiber is a compressed dry powder of dietary fiber.

9. The fossil fuel according to claim 8, wherein the compressed dry powder of the plant fiber is a powder obtained by removing contaminants from plant fiber, drying the plant fiber to a moisture content of less than 10%, compressing the dried fiber at a compression ratio of 4 : 1 to 6 : 1, pulverizing it to make a powder having a particle size in a range of 1 to 80 microns, and then drying the powder to a moisture content of less than 5 wt%.

10. The fossil fuel according to any one of claims 6 to 9, wherein the fossil fuel comprises heavy oil.

11. A method of reducing an amount of carbon dioxide emitted from a fossil fuel at combustion of the fossil fuel, the method comprises incorporating a dry powder of plant fiber into the fossil fuel.

12. The method of reducing an amount of carbon dioxide emitted from a fossil fuel at combustion of the fossil fuel according to claim 11, wherein the dry powder of the dietary fiber is a compressed dry powder of dietary fiber.
